# EUROPÄISCHE PATENTSCHRIFT

(11) **EP 2 865 550 B1**
(45) Veröffentlichungstag und Bekanntmachung des Hinweises auf die Patenterteilung: **30.11.2016**
(21) Anmeldenummer: 13189874.4
(22) Anmeldetag: 23.10.2013
(51) Int. Cl.: B60J 5/06

(54) **Faltwandkofferaufbau und Aufhängung eines Seitenwandelements eines Faltwandkofferaufbaus**
Foldable wall suitcase structure and suspension of a side wall element of a foldable wall suitcase structure
Structure de caisse à paroi pliable et suspension d'un élément de paroi latérale d'une structure de caisse à paroi pliable

(43) Veröffentlichungstag der Anmeldung: 29.04.2015
(73) Patentinhaber: Schmitz Cargobull AG, 48341 Altenberge (DE)
(72) Erfinder: Gerling, Manfred, 48683 Ahaus (DE)
(74) Vertreter: Cohausz & Florack

(56) Entgegenhaltungen:
- WO-A1-2010/085202
- DE-U1- 20 300 587

## Beschreibung

Die Erfindung betrifft eine Aufhängung eines Seitenwandelements eines Faltwandkofferaufbaus eines Nutzfahrzeugs, vorzugsweise Lastkraftwagens, Anhängers und/oder Aufliegers, mit einer Schlitteneinheit zum Verfahren der Aufhängung entlang eines Längsholms des Nutzfahrzeugs, einer Schwenkeineinheit zum Verschwenken des Seitenwandelements gegenüber der Schlitteneinheit, einer Montageeinheit zum Befestigen des Seitenwandelements an der Aufhängung und einem Federelement zum Andrücken des Seitenwandelements gegen den Längsholm des Nutzfahrzeugs. Ferner betrifft die Erfindung einen Faltwandkofferaufbau eines Nutzfahrzeugs mit einem, vorzugsweise dem Dach des Faltwandkofferaufbaus zugeordneten, Längsholm, einer entlang des Längsholms verschiebbaren Aufhängung der genannten Art und einem mit der Aufhängung verbundenen Seitenwandelement.

Nutzfahrzeuge in Form von Lastkraftwagen, Anhängern und Aufliegern können unterschiedliche Aufbauten aufweisen. Eine Art solcher Aufbauten stellen Kofferaufbauten dar, die im Gegensatz zu Planenaufbauten feste Seitenwände umfassen. Die Seitenwände können dabei aus starren und sich über die gesamte Längsseite des Nutzfahrzeugaufbaus erstreckenden Seitenwandpaneelen bestehen, so dass der Laderaum des Kofferaufbaus nur über die Rückwandtüren des Kofferaufbaus be- und entladen werden kann. Um einen seitlichen Zugang zum Laderaum von Kofferaufbauten zu ermöglichen, können Türen in die Seitenwandpaneele eingebracht werden. Diese sind für das seitliche Be- und Entladen jedoch kaum ausreichend. Kofferaufbauten von Nutzfahrzeugen werden daher bedarfsweise als sogenannte Faltwandkofferaufbauten ausgebildet.

Bei Faltwandkofferaufbauten ist wenigstens eine Seitenwand faltbar ausgebildet, um einen großen Teil der Seitenwand durch ein Zusammenfalten und Aufschieben derselben zu öffnen bzw. zum Be- und Entladen freizugeben. Die entsprechende Seitenwand ist daher aus einer Mehrzahl von Seitenwandelementen zusammengesetzt, die sich vorzugsweise jeweils über die Höhe der Seitenwand aber nur einen Bruchteil ihrer Länge erstrecken und eine rechteckige Form mit vertikal verlaufenden seitlichen Rändern aufweisen. Die Seitenwandelemente sind an diesen Rändern über Scharniere miteinander verbunden. Zudem sind die Seitenwände verschiebbar und schwenkbar an einem dem Dach zugeordneten Längsholm des Faltwandkofferaufbaus angeordnet. Die Seitenwandelemente können daher faltenbalgartig gefaltet werden, um die Seitenwand wenigstens teilweise zu öffnen, und nacheinander in eine gemeinsame Ebene gebracht werden, um die Seitenwand wieder zu verschließen. Die Seitenwandelemente können als Paneele mit zwei festen äußeren Decklagen aus Kunststoff und/oder Metall und einer dazuwischen angeordneten inneren Kernlage aus geschäumtem Kunststoff gebildet sein.

Bei derzeit üblichen Faltwandkofferaufbauten sind nur an jedem zweiten Seitenwandelement aktive Verriegelungseinrichtungen vorgesehen. Diese bestehen meist aus einer um eine vertikale Achse drehbare Verriegelungsstange mit Haken am oberen und unteren Ende. Die Verriegelungsstange kann über einen Handgriff gedreht werden, wobei die Haken je nach Stellung der Verriegelungsstange Halteelemente am Faltwandkofferaufbau hintergreifen können. Dies vereinfacht die Handhabung der Faltwand beim Öffnen und Schließen. Um die Seitenwand des Nutzfahrzeugs jedoch sicher und durchgängig durch die Seitenwand bzw. die Faltwand verschließen zu können, weisen auch die nicht aktiv beispielsweise über Verriegelungsstangen verriegelbare Seitenwandelemente Verriegelungsmittel auf, die so ausgebildet sind, dass durch die Schließbewegung der Seitenwand beispielsweise Haken formschlüssig hinter Halteelemente greifen. Man spricht hierbei auch von einer passiven Verriegelung. Damit diese passive Verriegelung auch am Längsholm des Nutzfahrzeugs zuverlässig erreicht werden kann, obwohl die Seitenwand typischerweise über Handgriffe im unteren Bereich der Seitenwand bedient wird, werden einzelne Seitenwandelemente über federbelastete Aufhängungen am Längsholm aufgehängt. Diese Federbelastung sorgt dafür, dass die entsprechenden Seitenwandelemente normalerweise bereits vor Erreichen der geschlossenen Stellung der Seitenwand wenigstens im oberen Bereich am Längsholm anliegen, um dort passiv verriegelt zu werden. Damit weder die Aufhängungen noch die Seitenwandelemente beim anschließenden vollständigen Schließen der Seitenwand beschädigt werden, erlauben die Federelemente ein gewisses Nachgeben der Aufhängung.

Faltwandkofferaufbauten der genannten Art sind beispielsweise aus der DE 203 00 587 U1 bekannt, auch wenn diese nicht auf die zuvor beschriebene Federung der Aufhängung eingeht. Die dort beschriebene Aufhängung weist eine Schwenkeinheit in Form eines Lenkerhebels auf, der an seinen beiden Enden um Drehachsen drehbar gelagert ist, und zwar einerseits an einer im Längsholm gehaltenen Schlitteneinheit und andererseits an einer am Seitenwandelement befestigten Montageeinheit. Das beschriebene Federelement, das das Seitenwandelement bereits kurz vor dem Erreichen der geschlossenen Stellung der Seitenwand an den Längsholm andrückt, um ein sicheres passives Verriegeln zu ermöglichen und zugleich beim weiteren Schließen der Seitenwand der entsprechenden Bewegung nachgibt, wäre beispielsweise zwischen der Schwenkeinheit und der Montageeinheit vorgesehen. Dabei würde das Federelement die Montageeinheit an die Schwenkeinheit in Form des Lenkerhebels heranziehen, so dass sich zwischen diesen ein recht spitzer Winkel ergibt. Im vollständig geschlossenen Zustand der Seitenwand wäre dieser Winkel etwas größer, wobei das Federelement gegen seine Federkraft ausgelenkt ist, weil das entsprechende Seitenwandelement bereits vor dem Erreichen der vollständig geschlossenen Stellung wenigstens teilweise am Längsholm angelegen hat, die Schwenkeinheit bis zum Erreichen der vollständig geschlossenen Stellung aber noch weiter verschwenkt worden ist.

Nachteilig an der bekannten Aufhängung ist der Platzbedarf derselben, der den Laderaum verringert. Insbesondere wird unterhalb des Längsholms die maximale Ladebreite eingeschränkt, was im Wesentlichen über die gesamte Länge des Nutzfahrzeugs gilt, da die Aufhängungen beim Öffnen und Schließen der Seitenwand entlang des Längsholms verfahren werden. Bei ungenauer Beladung kann die Aufhängung daher Teile der Ladung beschädigen.

Der vorliegenden Erfindung liegt somit die Aufgabe zugrunde, die Aufhängung und den Faltwandkofferaufbau jeweils der eingangs genannten und zuvor beschriebenen Art derart auszugestalten und weiterzubilden, dass der Laderaum besser genutzt werden kann.

Diese Aufgabe ist bei einer Aufhängung gemäß dem Oberbegriff des Anspruchs 1 dadurch gelöst, dass die Montageeinheit über das Federelement an der Schwenkeinheit gehalten ist.

Bei einem Faltwandkofferaufbau gemäß dem Oberbegriff von Anspruch 11 ist diese Aufgabe dadurch gelöst, dass die Aufhängung nach einem der Ansprüche 1 bis 10 ausgebildet ist.

Die Erfindung hat also erkannt, dass die Aufhängung insgesamt platzsparender ausgebildet werden kann, wenn die Montageeinheit über das Federelement an der Schwenkeinheit gehalten ist und das Federelement nicht bloß mit der Schwenkeinheit und der Montageeinheit zusammenwirkt. Es bedarf also nicht zunächst einer Verbindung zwischen der Schwenkeinheit und der Montageeinheit, um die Montageeinheit an der Schwenkeinheit zu halten, die ihrerseits an der Schlitteneinheit gehalten ist, und zudem einer weiteren Verbindung zwischen der Schwenkeinheit und der Montageeinheit über das Federelement, so dass ein Verschwenken der Schwenkeinheit gegenüber der Montageeinheit zu einer Vergrößerung oder Verringerung der Rückstellkraft des Federelements führt.

Die Verbindung zwischen der Montageeinheit und der Schwenkeinheit über das Federelement im Stand der Technik hat, wenn überhaupt, nur untergeordnet zur Stabilität der Aufhängung als solcher beigetragen. Erfindungsgemäß ist die Verbindung zwischen der Schwenkeinheit und der Montageeinheit über das Federelement dagegen wesentlich für die benötigte Stabilität der Aufhängung. Das Federelement übernimmt also erfindungsgemäß zwei unterschiedliche und jeweils wesentliche Funktionen für die Aufhängung. Dies erlaubt es aber zugleich, die Aufhängung kompakter auszubilden und eine größere maximale Ladebreite unmittelbar unterhalb des Längsholms bereitzustellen.

In diesem Zusammenhang sind grundsätzlich unter der Montageeinheit, der Schwenkeinheit und dem Federelement nicht zwingend separate Bauteile zu verstehen. Es wäre beispielsweise denkbar, dass ein Ende des Federelements mit dem Seitenwandelement und/oder ein anderes Ende des Federelements mit der Schlitteneinheit verbunden ist. Dazu muss das jeweilige Ende des Federelements jedoch regelmäßig entsprechend ausgebildet sein, so dass das entsprechende Ende als Montageeinheit oder Schwenkeinheit bezeichnet werden kann. Da die Federwirkung zwischen der Montageeinheit und der Schwenkeinheit benötigt wird, werden sich die entsprechenden Bereiche der Aufhängung regelmäßig hinsichtlich ihrer Ausgestaltung unterscheiden, auch wenn diese keine separaten Elemente bilden sollten, was grundsätzlich jedoch bevorzugt ist, da die Materialanforderungen an das Federelement grundsätzlich höher sein werden als an die Schwenkeinheit und/oder die Montageeinheit.

Bei einer ersten bevorzugten Aufhängung ist zur Einsparung unnötiger Bauteile und/oder unnötigen Materials die Montageeinheit ausschließlich über das Federelement an der Schwenkeinheit gehalten bzw. ausschließlich über das Federelement mit der Schwenkeinheit verbunden. Dadurch wird eine weiter verbesserte Platzersparnis hinsichtlich der Aufhängung möglich.

Alternativ oder zusätzlich kann die Schwenkeinheit gegenüber der Schlitteneinheit um eine Drehachse drehbar an der Schlitteneinheit gelagert sein. Die Verbindung beider Bauteile über eine Schwenkachse, die vorzugsweise vertikal ausgerichtet ist, ermöglicht die Bereitstellung der Funktion der Aufhängung, ohne unnötig viel Platz zu beanspruchen. Der Einfachheit halber ist die Schwenkeinheit in vertikaler Richtung gesehen unterhalb der Schlitteneinheit angeordnet, auch wenn die Schwenkeinheit zur weiteren Einsparung von Bauraum in einer Richtung quer zum Längsholm neben der Schlitteneinheit vorgesehen sein kann.

Zur weiteren konstruktiven Vereinfachung der Aufhängung und zur weiteren Einsparung von Bauraum kann zwischen der Montageeinheit und der Schlitteneinheit eine einzige Drehachse vorgesehen sein. Das Federelement ermöglicht zwar ein zusätzliches Verschwenken der Aufhängung und/oder ein Verformen des Federmittels, stellt aber selbst keine Drehachse im eigentlichen Sinne dar.

Das Federelement ist im Übrigen wenigstens im Wesentlichen aus einem Federstahl gefertigt. Dies ermöglicht einerseits ein zuverlässiges Verformen des Federmittels und andererseits die hinreichend stabile Ausgestaltung der Aufhängung.

Alternativ oder zusätzlich kann das Federelement wenigstens im Wesentlichen durch ein flaches, bogenförmig vorgespanntes Metallband gebildet sein. So kann mit geringem Platzverbrauch erreicht werden, dass das der Aufhängung zugeordnete Seitenwandelement bereits vor dem endgültig geschlossenen Zustand der Seitenwand in Anlage an den Längsholm gelangt, um dort zuverlässig, insbesondere passiv, mit dem Längsholm verriegelt zu werden.

Insbesondere im Zusammenhang mit einem Federelement in Form eines bogenförmig vorgespannten Metallbands ist es bevorzugt, wenn das Federelement nach Art einer Blattfeder ausgebildet ist. Dies ist sowohl material- also auch platzsparend. Vorzugsweise ist die Blattfeder aus diesem Grunde auch einlagig ausgebildet. Auf die Verwendung von Federpaketen aus mehreren Lagen von Blattfedern wird dagegen vorzugsweise verzichtet, und zwar beispielsweise aus Gründen des konstruktiven Aufwands.

Unabhängig davon, ob die Schwenkeinheit und/oder die Montageeinheit separate Bauteile sind oder nicht, bietet es sich an, wenn die Materialstärke des Federelements in horizontaler Richtung und quer zur Längserstreckung der Aufhängung geringer ist als die Materialstärke der Schwenkeinheit und/oder der Montageeinheit. Hierdurch kann einerseits eine ausreichende mechanische Stabilität und Festigkeit der Aufhängung sowie andererseits eine ausreichende Elastizität der Aufhängung im Bereich des Federelements sichergestellt werden.

Um die Schwenkeinheit möglichst nahe an der Seitenwand anordnen und so weiteren Laderaum gewinnen zu können, kann die Schlitteneinheit über ein Zwischenelement mit der Schwenkeinheit verbunden sein, wobei die Schwenkeinheit vorzugsweise bezogen auf den Längsholm weiter außen mit dem Zwischenelement verbunden ist als das Zwischenelement mit der Schlitteneinheit verbunden ist. Die Verwendung des Zwischenelements ist dann besonders zweckmäßig, wenn sich die Verbindung zwischen dem Zwischenelement und der Schwenkeinheit weiter außen befindet als sich die Schlitteneinheit nach außen erstreckt. Dies wäre ohne Zwischenelement konstruktiv entsprechend schwieriger umzusetzen. Ganz grundsätzlich wäre es konstruktiv und funktional zweckmäßig, wenn das Zwischenelement über eine Drehachse drehbar mit der Schwenkeinheit verbunden ist.

Hinsichtlich des Faltwandkofferaufbaus ist es grundsätzlich bevorzugt, wenn die Schlitteneinheit im Längsholm geführt ist. Dann ist diese gut gegen äußere Einflüsse geschützt und sicher am Holm gehalten.

Im Übrigen kann das Öffnen einer Seitenwand eines Faltwandkofferaufbaus sowie das Be- und das Entladen desselben dadurch vereinfacht werden, dass mehrere Seitenwandelemente mit separaten Aufhängungen verbunden sind. Da die Seitenwandelemente vorzugsweise untereinander verbunden sind, kann der konstruktive Aufwand gesenkt werden, ohne funktionale Einbußen in Kauf nehmen zu müssen, wenn, vorzugsweise jeweils, zwischen zwei mit Aufhängungen verbundenen Seitenwandelementen ein nicht mit einer Aufhängung verbundenes Seitenwandelement vorgesehen ist.

Um die Seitenwand zuverlässig zu schließen und beispielsweise eine zuverlässige Verriegelung der Seitenwand am Rahmen der Seitenwand umfassend den Längsholm zu erreichen, ist die Montageeinheit vorzugsweise einem seitlichen Ende des Seitenwandelements zugeordnet. Die Montageeinheit wirkt also nicht mittig auf das Seitenwandelement, sondern bevorzugt an einem Rand davon, wo die Verriegelung des entsprechenden Seitenwandelements mit dem Längsholm erfolgen kann. Daher befindet sich vorzugsweise an dem der Montageeinheit zugewanden Ende des Seitenwandelements eine passiv zu betätigende Verriegelungseinrichtung zum Verriegeln des Seitenwandelements mit dem Längsholm des Faltwandkofferaufbaus.

Alternativ oder zusätzlich kann dem der Montageeinheit abgewandten Rand des Seitenwandelements eine aktiv zu betätigende Verriegelungseinrichtung zum Verriegeln des Seitenwandelements mit dem Längsholm zugeordnet sein. Dort wo die, vorzugsweise händisch, zu bedienende Verriegelungseinrichtung vorgesehen ist, bedarf es für die Verriegelung weniger Unterstützung durch die Aufhängung als am gegenüberliegenden Rand des Seitenwandelements.

Das Öffnen lässt sich nicht nur konstruktiv einfach gestalten, wenn die sich aneinanderreihenden Seitenwandelemente untereinander in Form von Scharnieren verbunden sind. Dabei kann es vorgesehen sein, dass die Seitenwandelemente zwischen einander abwechselnd nach innen und nach außen weisende Knicke bilden. Wenn die den aktiv zu betätigenden Verriegelungseinrichtungen zugeordneten Knicke und damit auch die entsprechenden Bedieneinrichtungen bezogen auf die Seitenwand bzw. des Nutzfahrzeugs nach außen weisen, ermöglicht dies eine einfache Bedienbarkeit. Alternativ oder zusätzlich können die den Montageeinheiten zugewandten Knicke bezogen auf die Seitenwand bzw. auf das Nutzfahrzeug nach innen weisen, so dass beispielsweise die Aufhängungen kürzer und materialsparender ausgebildet werden können.

Die Erfindung wird nachfolgen anhand von einer lediglich ein Ausführungsbeispiel darstellenden Zeichnung näher erläutert. In der Zeichnung zeigt
- Fig. 1: einen erfindungsgemäßen Faltwandkofferaufbau in einer perspektivischen Ansicht,
- Fig. 2: einen Teil der Seitenwand des Faltwandkofferaufbaus aus Fig. 1 in einer schematischen Seitenansicht,
- Fig. 3: ein Detail des Faltwandkofferaufbaus aus Fig. 1 in einer schematischen Schnittansicht parallel zum Dach,
- Fig. 4: ein Seitenwandelement und eine zugehörige Aufhängung des Faltwandkofferaufbaus aus Fig. 1 in einer Seitenansicht und
- Fig. 5: die Aufhängung aus Fig. 5 in einer Draufsicht von oben und
- Fig. 6: ein Detail des Faltwandkofferaufbaus aus Fig. 1 umfassend die Aufhängung aus Fig. 4 in einer schematischen Schnittansicht quer zum Holm.

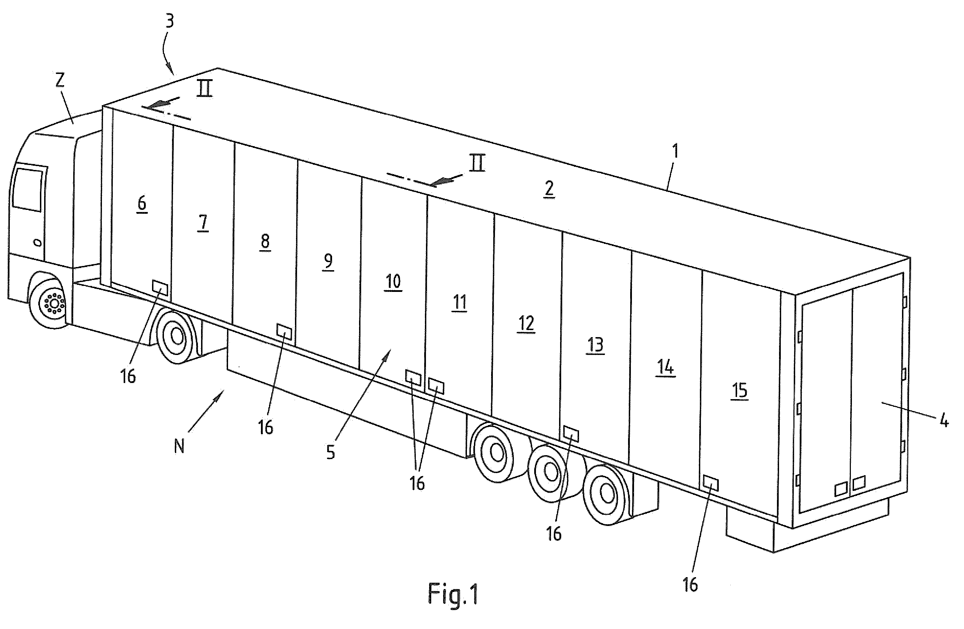

In der Fig. 1 ist eine Zugmaschine Z mit einem Nutzfahrzeug N in Form eines Aufliegers dargestellt. Das Nutzfahrzeug umfasst einen Faltwandkofferaufbau 1 mit einem festen Dachpaneel 2, einer festen Stirnwand 3 und einer Rückwand 4 mit zwei Rückwandtüren. Zudem sind die an sich festen Seitenwände 5 aus einer Reihe von Seitenwandelementen 6-15 in Form von Seitenwandpaneelen zusammensetzen. Jede der Seitenwände 5 besteht aus zwei Teilen, die jeweils fünf miteinander verbundene Seitenwandelemente 6-15 umfassen. Ein Teil der Seitenwand 5 kann in Richtung der Stirnwand 3 des Faltkofferaufbaus 1 verschoben und zusammengefaltet werden, während der andere Teil der Seitenwand 5 in Richtung der Rückwand 4 verschoben und zusammengefaltet werden kann. Dabei werden die entsprechenden Seitenwandelemente 6-15 faltenbalgartig zusammengelegt.

An jedem zweiten Seitenwandelement 6,8,10,12,13,15, beim dargestellten und insoweit bevorzugten Faltwandkofferaufbau 1 am ersten, dritten und fünften Seitenwandelement 6,8,11,13,15 eines Teils der Seitenwand 5, sind Handhebel 16 vorgesehen, über die aktive Verriegelungseinrichtungen 17 betätigt werden können, um die Seitenwand 5 in der geschlossenen Stellung am Faltwandkofferaufbau 1 verriegeln und die Seitenwand 5 zum Öffnen derselben entriegeln zu können. Die aktiven Verriegelungseinrichtungen 17 weisen beim dargestellten und insoweit bevorzugten Faltwandkofferaufbau 1 über die Handhebel 16 schwenkbare, vertikale ausgerichtete Verriegelungsstangen 18 auf, die am oberen und am unteren Ende Haken 19 zum Hintergreifen von Halteelementen an einem Längsholm 20 des Faltwandkofferaufbaus 1 einerseits und dem Nutzfahrzeugboden 21 andererseits umfassen. Dabei könne die Haken 19 in Aussparungen des Längsholms 20 und des Nutzfahrzeugbodens 21 eingreifen. Die aktiven Verriegelungseinrichtungen 17 sind beim dargestellten und insoweit bevorzugten Faltwandkofferaufbau 1 an Rändern der entsprechenden Seitenwandelemente 6,8,10,11,12,15 vorgesehen.

Im geschlossenen Zustand der Seitenwand 5 hintergreifen sich zudem passive Verriegelungsmittel 22 formschlüssig. Diese passiven Verriegelungsmittel 22 sind ebenfalls an jedem zweiten Seitenwandelement 7,9,12,14, beim dargestellten und insoweit bevorzugten Faltwandkofferaufbau 1 am zweiten und am vierten Seitenwandelement 7,9,12,14, und wenigstens am Längsholm 20 vorgesehen. Die passiven Verriegelungsmittel 22 sind dabei ebenfalls den Rändern der Seitenwandelemente 7,9,12,14 zugeordnet, und zwar vorzugsweise den Rändern, an denen auch die Aufhängungen mit den Seitenwandelementen 7,9,12,14 verbunden sind. Die passiven Verriegelungsmittel 22, bei denen es sich ebenfalls beispielsweise um Haken an den Seitenwänden 5 und korrespondierende Haken oder Aussparungen des Längsholms 20 oder umgekehrt handeln kann, hintergreifen sich alleine durch die Schließbewegung der Seitenwand 5. Eine aktive Betätigung der daher passiven Verriegelungsmittel 22 ist also nicht erforderlich.

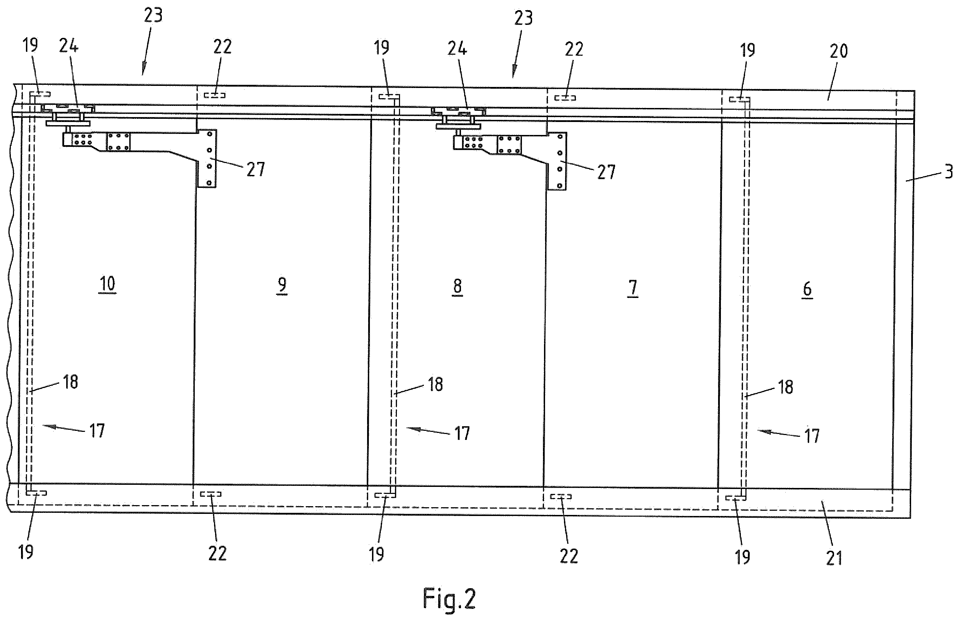

Die Verriegelungseinrichtungen 17 sind in der Fig. 2 für einen vorderen Teil der Seitenwand 5 dargestellt. Die oberen Haken 19 greifen im geschlossenen Zustand in den Längsholm 20 und in den Nutzfahrzeugboden 21 ein, so dass die Seitenwandelemente 6,8,10 nicht nach außen bewegt werden können. Um die Seitenwand 5 zu öffnen müssen zunächst die Verriegelungsstangen 18 gedreht werden, so dass die Haken 19 außer Eingriff mit dem Längsholm 20 und dem Nutzfahrzeugboden 21 gelangen. Dann können die über Aufhängungen 23 am Längsholm 20 gehaltenen Seitenwandelemente 6-10 aufgeschoben werden. Dabei gelangen auch die passiven Verriegelungsmittel 22 zwischen dem Längsholm 22 und den entsprechenden Seitenwandelementen 6-10 außer Eingriff.

Die Aufhängungen 23 werden dabei zudem längs des Längsholms 20 verschoben, wozu die Aufhängungen 23 Schlitteneinheiten 24 umfassen, die in einem Schienenabschnitt 25 im Längsholm 20 gehalten sind und dort über Rollen 26 entlang von hierfür vorgesehenen Laufflächen verschoben werden können. Die Aufhängungen 23 sind dabei jedem zweiten Seitenwandelement 7,9, beim dargestellten und insoweit bevorzugten Faltwandkofferaufbau 1 dem zweiten und vierten Seitenwandelement 7,9, zugeordnet. Dabei ist die Aufhängung 23 die näher an dem Ende der Seitenwand 7,9 vorgesehen ist, in deren Richtung der entsprechende Teil der Seitenwand 5 aufgeschoben wird, kürzer ausgebildet als die von dem entsprechenden Ende weiter beabstandet angeordnete Aufhängung 23, um eine möglichst weite Öffnung der Seitenwand 5 zu ermöglichen. Mit der Länge der Aufhängung 23 ist in diesem Zusammenhang die Distanz zwischen dem Schlittenelement 24 und dem mit der Seitenwand 5 verbundenen Teil der Montageeinheit 27 zu verstehen.

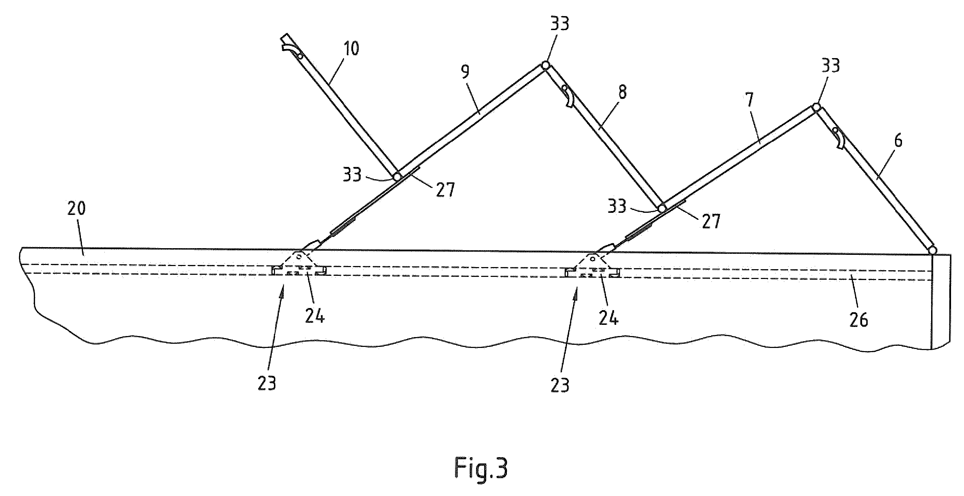

In der Fig. 3 ist ein Teil der Seitenwand 5 in einer teilweise geöffneten Stellung dargestellt. Die dargestellten Seitenwandelemente 6-10 bilden an ihren Verbindungsstellen Knicke, die abwechselnd nach innen und nach außen weisen. Dazu können die Seitenwandelemente 6-10 über entsprechende Scharniere 33 miteinander verbunden sein. Die nach innen in Richtung des Laderaums weisenden Knicke sind jeweils einer Aufhängung 23 zugeordnet und umgekehrt. Die den Verriegelungseinrichtungen 17 zugeordneten Knicke sind benachbart zu den nach außen gerichteten Knicken des dargestellten Teils der Seitenwand 5 vorgesehen.

Der nicht separat dargestellte hintere Teil der Seitenwand 5 entspricht in seinem Aufbau dem vorderen Teil der Seitenwand, jedoch mit dem Unterschied, dass der hintere Teil der Seitenwand 5 nach hinten verschoben wird und mit der Rückwand 4 verbunden ist. Der dargestellte vordere Teil der Seitenwand 5 wird nach vorne verschoben und ist mit der Stirnwand 3 verbunden.

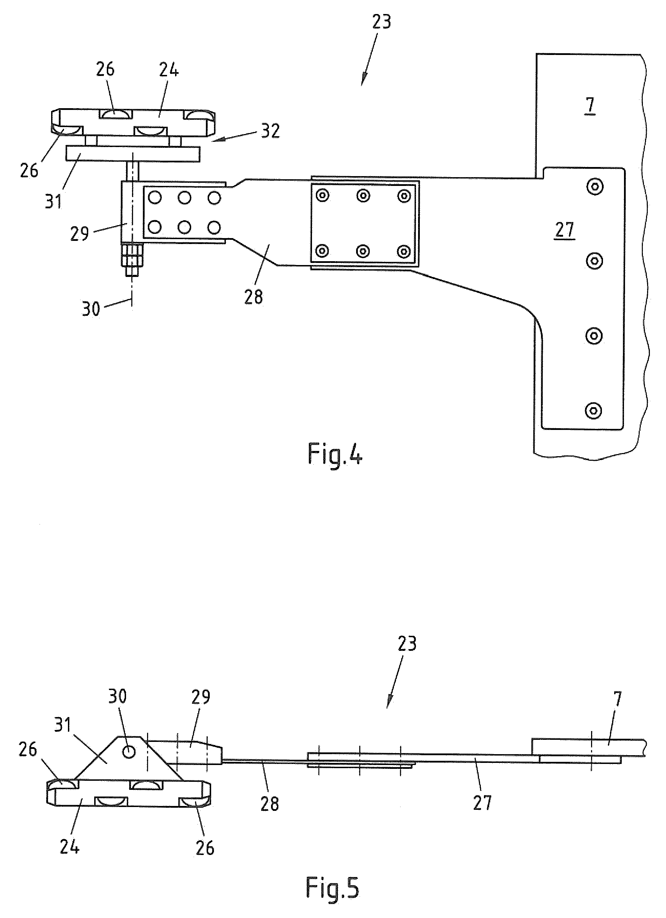

In der Fig. 4 ist ein Seitenwandelement 7 und eine zugehörige Aufhängung 23 dargestellt, wobei das Seitenwandelement 7 über eine Montageeinheit 27 an der Aufhängung 23 montiert ist. Die Montageeinheit 27 ist plattenartig ausgebildet und stellt eine große Anlagefläche zwischen der Montageeinheit 27 und dem Seitenwandelement 7 zur Kraftübertragung zur Verfügung. Zudem ist die Montageeinheit 27 beim dargestellten und insoweit bevorzugten Faltwandkofferaufbau 1 L-förmig ausgebildet. Ein Schenkel der Montageeinheit 27 dient dabei der Verbindung der Montageeinheit 27 mit dem zugehörigen Seitenwandelement 7, während der andere Schenkel der Verbindung der Montageeinheit 27 mit einem Federelement 28 dient, über das die Montageeinheit 27 federelastisch mit einer Schwenkeinheit 29 verbunden ist. Die Verbindung des Federelements 28 mit der Schwenkeinheit 29 und der Montageinheit 27 erfolgt ebenso wie die Verbindung zwischen der Montageeinheit 27 und dem Seitenwandelement 7 über Schraubverbindungen.

Insbesondere in den Fig. 5 ist dargestellt, das die Schwenkeinheit 29 um eine im Wesentlichen vertikale Drehachse 30 drehbar gehalten ist. Dabei ist die Schwenkeinheit 29 über ein Zwischenelement 31 mit der im Längsholm 20 geführten Schlitteneinheit 24 verbunden. Die Verbindung zwischen dem Zwischenelement 31 und der Schlitteneinheit 24 ist über zwei separate Verbindungsstellen 32 verdrehfest ausgebildet, während die Schwenkeinheit 29 um die Drehachse 30 drehbar am Zwischenelement 31 gehalten ist. Das Zwischenelement 31 erlaubt es, die Drehachse 30 der Schwenkeinheit 29 gegenüber der Schlitteneinheit 24 weit nach außen zu verlegen. Beim dargestellten und insoweit bevorzugten Faltwandkofferaufbau 1 ist die Drehachse 30 bezogen auf den Faltwandkofferaufbau 1 außerhalb der Schlitteneinheit 24 angeordnet.

Zudem weist das Federelement 28 im Vergleich zur Schwenkeinheit 29 und zur Montageeinheit 27 eine geringere Materialstärke auf, wobei sich die Materialstärke in horizontaler Richtung quer zur Längserstreckung der Aufhängung 23 erstreckt. Bedarfsweise ist das in Form einer Blattfeder ausgebildete Federelement 28 leicht gekröpft, gebogen, vorgespannt und/oder leicht schräg montiert, sodass das mit der Aufhängung 23 verbundene Seitenwandelement 7 mit dem Rand, an dem die Aufhängung 23 vorgesehen ist, bereits gegen den Längsholm 20 gedrückt wird, bevor die Seitenwand 5 die vollständig geschlossenen Stellung erreicht hat. Nach dem Kontakt zwischen dem entsprechenden Seitenwandelement 7 und dem Längsholm 20 führt die weitere Schließbewegung der Seitenwand 5 zu einer Verformung des Federelements 28 entgegen der so ausgelösten Rückstellkraft des Federelements 28. Eine Beschädigung des Seitenwandelements 7 oder der Aufhängung 23 kann durch das entsprechende Nachgeben des Federelements 28 vermieden werden. Durch die beschriebene vorzeitige Anlage des Seitenwandelements 7, vorzugsweise des mit der Aufhängung 23 verbundenen Rands des Seitenwandelements 7, am Längsholm 20 wird dort zuverlässig die passive Verriegelung des Seitenwandelements 7 mit dem Längsholm 20 erreicht.

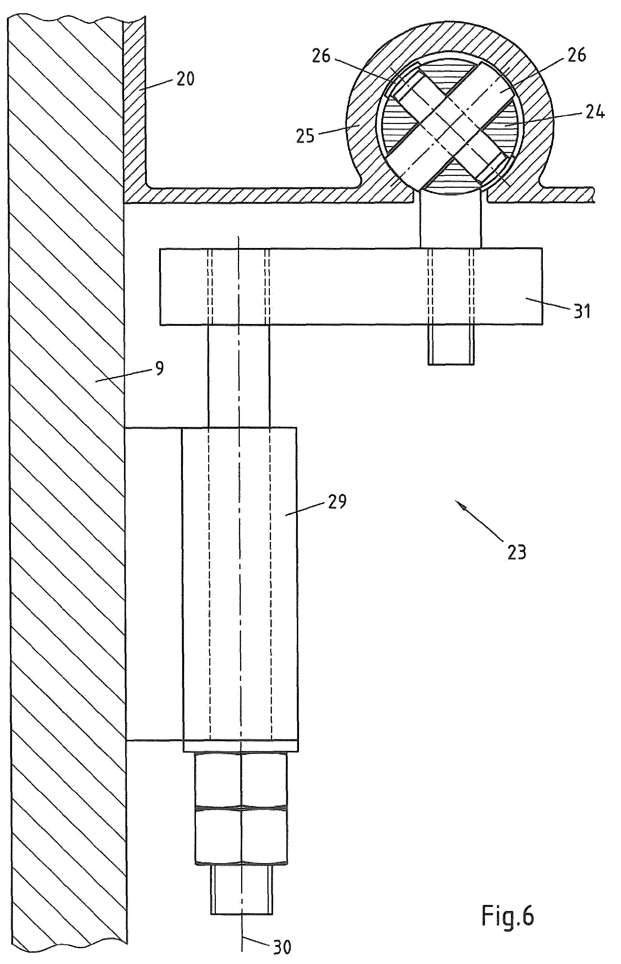

In der Fig. 6 ist ein Seitenwandelement 9 der Seitenwand 5 mitsamt zugehöriger Aufhängung 23 in einer geschlossenen Stellung dargestellt. Die Schlitteneinheit 24 ist über die um etwa 90° versetzten Rollen 26 in einem Schienenabschnitt 25 des Längsholms 20 gehalten, der einen etwa kreisrunden Querschnitt aufweist und nach unten geöffnet ist, auch wenn dies nicht zwingen der Fall sein muss. Durch die Verbindung der Schwenkeinheit 29 mit der Schlitteneinheit 24 über das im Wesentlichen als eine horizontale Platte ausgebildete Zwischenelement 31 kann eine große maximale Laderaumbreite unmittelbar unterhalb des Längsholms 20 bereitgestellt werden. Die Drehachse 30 der Schwenkeinheit 29 kann so sehr nahe an dem Seitenwandelement 9 positioniert werden. Auch im geöffneten Zustand der Aufhängung 23 ragt die Schwenkeinheit 29 nur geringfügig in den Laderaum des Faltwandkofferaufbaus 1 hinein.

Wenn im Zusammenhang mit der Erfindung in der allgemeinen oder speziellen Beschreibung von horizontal und vertikal die Rede ist, so sind mit diesen Angaben die Richtungen gemeint, die bei einer Ausrichtung des Nutzfahrzeugs auf einer ebenen und horizontalen Stellfläche im Wesentlich vertikal oder horizontal verlaufen würden. Vertikal kann also alternativ eine Richtung senkrecht zum Dach und/oder Nutzfahrzeugboden des Faltwandkofferaufbaus bedeuten, während horizontal eine Richtung parallel zum Dach und/oder zum Nutzfahrzeugboden beschreiben kann. Der leichteren Verständlichkeit halber wird im Zusammenhang mit der Erfindung jedoch den Begriffen vertikal und horizontal der Vorzug gegeben.

## Patentansprüche

1. Aufhängung (23) eines Seitenwandelements (7,9,12,14) eines Faltwandkofferaufbaus (1) eines Nutzfahrzeugs (N), vorzugsweise Lastkraftwagens, Anhängers und/oder Aufliegers, mit einer Schlitteneinheit (24) zum Verfahren der Aufhängung (23) entlang eines Längsholms (20) des Nutzfahrzeugs (N), einer Schwenkeineinheit (29) zum Verschwenken des Seitenwandelements (7,9,12,14) gegenüber der Schlitteneinheit (24), einer Montageeinheit (27) zum Befestigen des Seitenwandelements (7,9,12,14) an der Aufhängung (23) und einem Federelement (28) zum Andrücken des Seitenwandelements (7,9,12,14) gegen den Längsholm (20) des Nutzfahrzeugs (N),
**dadurch gekennzeichnet, dass** die Montageeinheit (27) über das Federelement (28) an der Schwenkeinheit (29) gehalten ist.

2. Aufhängung nach Anspruch 1,
**dadurch gekennzeichnet, dass** die Montageeinheit (27) ausschließlich über das Federelement (28) an der Schwenkeinheit (29) gehalten ist.

3. Aufhängung nach Anspruch 1 oder 2,
**dadurch gekennzeichnet, dass** die Schwenkeinheit (29) gegenüber der Schlitteneinheit (24) um eine Drehachse (30) drehbar an der Schlitteneinheit (24) gelagert ist.

4. Aufhängung nach einem der Ansprüche 1 bis 3,
**dadurch gekennzeichnet, dass** zwischen Montageeinheit (27) und Schlitteneinheit (24) eine einzige Drehachse (30) vorgesehen ist.

5. Aufhängung nach einem der Ansprüche 1 bis 4,
**dadurch gekennzeichnet, dass** das Federelement (28) wenigstens im Wesentlichen aus einem Federstahl gefertigt ist.

6. Aufhängung nach einem der Ansprüche 1 bis 5,
**dadurch gekennzeichnet, dass** das Federelement (28) wenigstens im Wesentlichen aus einem flachen bogenförmig vorgespannten Metallband gefertigt ist.

7. Aufhängung nach einem der Ansprüche 1 bis 6,
**dadurch gekennzeichnet, dass** das Federelement (28) nach Art einer, vorzugsweise einlagigen, Blattfeder ausgebildet ist.

8. Aufhängung nach einem der Ansprüche 1 bis 7,
**dadurch gekennzeichnet, dass**
die Materialstärke des Federelements (28) in horizontaler Richtung geringer ist als die Materialstärke der Schwenkeinheit (29) und/oder der Montageeinheit (27).

9. Aufhängung nach einem der Ansprüche 1 bis 8,
**dadurch gekennzeichnet, dass**
die Schlitteneinheit (24) über ein Zwischenelement (31) mit der Schwenkeinheit (29) verbunden ist und dass die Schwenkeinheit (29) bezogen auf den Längsholm (20) weiter außen mit dem Zwischenelement (31) verbunden ist als das Zwischenelement (31) mit der Schlitteneinheit (24) verbunden ist, vorzugsweise weiter außen als sich die Schlitteneinheit (24) nach außen erstreckt.

10. Aufhängung nach Anspruch 9,
**dadurch gekennzeichnet, dass** die Schwenkeinheit (29) um eine Drehachse (30) gegenüber dem Zwischenelement (31) drehbar mit dem Zwischenelement (31) verbunden ist.

11. Faltwandkofferaufbau (1) eines Nutzfahrzeugs (N) mit einem, vorzugsweise dem Dach (2) des Faltwandkofferaufbaus (1) zugeordneten, Längsholm (20), einer entlang des Längsholms (20) verschiebbaren Aufhängung (23) und einem mit der Aufhängung (23) verbundenen Seitenwandelement (7,9,12,14),
**dadurch gekennzeichnet, dass** die Aufhängung (23) nach einem der Ansprüche 1 bis 10 ausgebildet ist.

12. Faltwandkofferaufbau nach Anspruch 11,
**dadurch gekennzeichnet, dass** die Schlitteneinheit (24) im Längsholm (20) geführt ist.

13. Faltwandkofferaufbau nach Anspruch 11 oder 12,
**dadurch gekennzeichnet, dass** mehrere Seitenwandelemente (7,9,12,145) mit Aufhängungen (23) verbunden sind und, vorzugsweise, dass zwischen zwei mit Aufhängungen (23) verbundenen Seitenwandelementen (7,9,12,14) ein nicht mit einer Aufhängung (23) verbundenes Seitenwandelement (8,13) vorgesehen ist.

14. Faltwandkofferaufbau nach einem der Ansprüche 11 bis 13,
**dadurch gekennzeichnet, dass**
die Montageeinheit (27) einem seitlichen Ende des Seitenwandelements (7,9,12,14) zugeordnet ist und, vorzugsweise, dass dem der Montageeinheit (27) zugewandten Ende des Seitenwandelements (7,9,12,14) ein passives Verriegelungsmittel (22) zum Verriegeln des Seitenwandelements (7,9,12,14) mit dem Längsholm (20) zugeordnet ist.

15. Faltwandkofferaufbau nach Anspruch 14,
**dadurch gekennzeichnet, dass** dem der Montageeinheit (27) abgewandten seitlichen Ende des Seitenwandelements (7,9,12,14) eine aktiv zu betätigende Verriegelungseinrichtung (17) zum Verriegeln des Seitenwandelements (6,8,10,11,13,15) mit dem Längsholm (20) zugeordnet ist.

## Claims

1. Mounting bracket (23) of a sidewall element (7, 9, 12, 14) of a folding side box body (1) of a commercial vehicle (N), in particular a heavy goods vehicle, trailer and/or semitrailer, with a slide unit (24) for operating the mounting bracket (23) along a longitudinal beam (20) of the commercial vehicle (N), a swivel unit (29) for swivelling the sidewall element (7, 9, 12, 14) relative to the slide unit (24), an assembly unit (27) for attaching the sidewall element (7, 9, 12, 14) to the mounting bracket (23) and a spring element (28) to press the sidewall element (7, 9, 12, 14) against the longitudinal beam (20) of the commercial vehicle (N),
**characterised in that**
the assembly unit (27) is held on the swivel unit (29) via the spring element (28).

2. Mounting bracket according to claim 1,
**characterised in that**
the assembly unit (27) is held on the swivel unit (29) solely via the spring element (29).

3. Mounting bracket according to claim 1 or 2,
**characterised in that**
the swivel unit (29) is pivoted toward the slide unit (24) around a pivot axis (30) on the slide unit (24).

4. Mounting bracket according to any one of claims 1 to 3,
**characterised in that**
a single pivot axis (30) is included between the assembly unit (27) and slide unit (24).

5. Mounting bracket according to any one of claims 1 to 4,
**characterised in that**
the spring element (28) is produced at least primarily from a spring steel.

6. Mounting bracket according to any one of claims 1 to 5,
**characterised in that**
the spring element (28) is produced at least primarily from a flat, arched, pre-stressed metal strip.

7. Mounting bracket according to any one of claims 1 to 6,
**characterised in that**
the spring element (28) is designed according to the type of leaf spring, preferably single leaf.

8. Mounting bracket according to any one of claims 1 to 7,
**characterised in that**
the material strength of the spring element (28) in the horizontal direction is less than the material strength of the swivel unit (29) and/or the assembly unit (27).

9. Mounting bracket according to any one of claims 1 to 8,
**characterised in that**
the slide unit (24) is connected with the swivel unit (29) via an intermediate element (31) and the swivel unit (29), with regard to the longitudinal brace (20), is connected with the intermediate element (31) further out than the intermediate element (31) is connected with the slide unit (24), preferably further out than slide unit (24) extends outward.

10. Mounting bracket according to claim 9,
**characterised in that**
the swivel unit (29) suspended around a pivot axis (30) is connected to the intermediate element (31) and is pivotably connected with the intermediate element (31).

11. Folding side box body (1) of a commercial vehicle (N) with a longitudinal brace (20), preferably assigned to the roof (2) of the folding side box body (1), a mounting bracket (23) moveable along the longitudinal brace (20) and a sidewall element (7, 9, 12, 14) connected with the mounting bracket (23),
**characterised in that**
the mounting bracket (23) is designed according to any one of claims 1 to 10.

12. Folding side box body according to claim 11,
**characterised in that**
the slide unit (24) is routed in the longitudinal brace (20).

13. Folding side box body according to claim 11 or 12,
**characterised in that**
several sidewall elements (7, 9, 12, 14) are connected with mounting brackets (23) and, preferably, that between two sidewall elements (7, 9, 12, 14) connected with mounting brackets, (23) one connected sidewall element (8, 13) is not provided with a mounting bracket (23).

14. Folding side box body according to any one of claims 11 to 13,
**characterised in that**
the assembly unit (27) is assigned to a lateral end of the sidewall element (7, 9, 12, 14) and, preferably, that the end of the sidewall element (7, 9, 12, 14) facing the assembly unit (27) is assigned a passive locking mechanism (22) for locking the sidewall element (7, 9, 12, 14) with the longitudinal brace (20).

15. Folding side box body according to claim 14,
**characterised in that**
the lateral end of the sidewall element (7, 9, 12, 14) facing away from the assembly unit (27) is assigned an active locking device (17) for locking the sidewall element (6, 8, 10, 11, 13, 15) with the longitudinal brace (20).

## Revendications

1. Dispositif de suspension (23) d'un élément de paroi latérale (7, 9, 12, 14) d'une structure de caisse fourgon à parois pliables (1) d'un véhicule utilitaire (N), de préférence d'un poids lourd, d'une remorque et/ou d'une semi-remorque, comportant une unité chariot (24) pour le déplacement du dispositif de suspension (23) le long d'un montant longitudinal (20) du véhicule utilitaire (N), une unité pivotante (29) pour le basculement de l'élément de paroi latérale (7, 9, 12, 14) par rapport à l'unité chariot (24), une unité de montage (27) pour la fixation de l'élément de paroi latérale (7, 9, 12, 14) sur le dispositif de suspension (23) et un élément à ressort (28) pour l'appui de l'élément de paroi latérale (7, 9, 12, 14) contre le montant longitudinal (20) du véhicule utilitaire (N),
**caractérisé en ce que** l'unité de montage (27) est maintenue sur l'unité pivotante (29) à l'aide de l'élément à ressort (28).

2. Dispositif de suspension selon la revendication 1,
**caractérisé en ce que** l'unité de montage (27) est maintenue sur l'unité pivotante (29) exclusivement à l'aide de l'élément à ressort (28).

3. Dispositif de suspension selon la revendication 1 ou 2,
**caractérisé en ce que** l'unité pivotante (29), par rapport à l'unité chariot (24), est logée rotative autour d'un axe de rotation (30) sur l'unité chariot (24).

4. Dispositif de suspension selon une des revendications de 1 à 3,
**caractérisé en ce que** l'on prévoit entre l'unité de montage (27) et l'unité chariot (24) un seul axe de rotation (30).

5. Dispositif de suspension selon une des revendications de 1 à 4,
**caractérisé en ce que** l'élément à ressort (28) est fabriqué, au moins essentiellement, à partir d'un acier à ressort.

6. Dispositif de suspension selon une des revendications de 1 à 5,
**caractérisé en ce que** l'élément à ressort (28) est fabriqué, au moins essentiellement, à partir d'une bande métallique précontrainte plate en forme d'arc.

7. Dispositif de suspension selon une des revendications de 1 à 6,
**caractérisé en ce que** l'élément à ressort (28) est conçu à la façon d'un ressort à lame étant, de préférence, à une couche.

8. Dispositif de suspension selon une des revendications de 1 à 7,
**caractérisé en ce que** l'épaisseur de matériau de l'élément à ressort (28) en direction horizontale est inférieure à l'épaisseur de matériau de l'unité pivotante (29) et/ou de l'unité de montage (27).

9. Dispositif de suspension selon une des revendications de 1 à 8,
**caractérisé en ce que** l'unité chariot (24) est reliée à l'unité pivotante (29) à l'aide d'un élément intermédiaire (31) et que l'unité pivotante (29), en référence au montant longitudinal (20), est reliée plus à l'extérieur à l'élément intermédiaire (31) que l'élément intermédiaire (31) à l'unité chariot (24), de préférence encore plus à l'extérieur que l'extension de l'unité chariot (24) vers l'extérieur.

10. Dispositif de suspension selon la revendication 9,
**caractérisé en ce que** l'unité pivotante (29), par rapport à l'élément intermédiaire (31), est reliée rotative autour de l'axe de rotation (30) sur l'élément intermédiaire (31).

11. Structure de caisse fourgon à parois pliables (1) d'un véhicule utilitaire (N) comportant un montant longitudinal (20), de préférence associé au toit (2) de la structure de caisse fourgon à parois pliables (1), un dispositif de suspension (23) susceptible de pouvoir coulisser le long du montant longitudinal (20) et un élément de paroi latérale (7, 9, 12, 14) relié au dispositif de suspension (23),
**caractérisée en ce que** le dispositif de suspension (23) est conçu selon une des revendications de 1 à 10.

12. Structure de caisse fourgon à parois pliables selon la revendication 11,
**caractérisée en ce que** l'unité chariot (24) est guidée dans le montant longitudinal (20).

13. Structure de caisse fourgon à parois pliables selon la revendication 11 ou 12,
**caractérisée en ce que** plusieurs éléments de paroi latérale (7, 9, 12, 145) sont reliés à des dispositifs de suspension (23) et que l'on prévoit, de préférence, entre deux éléments de paroi latérale (7, 9, 12, 14) reliés à des dispositifs de suspension (23), un élément de paroi latérale (8, 13) n'étant pas relié à un dispositif de suspension (23).

14. Structure de caisse fourgon à parois pliables selon une des revendications de 11 à 13,
**caractérisée en ce que** l'unité de montage (27) est associée à une extrémité latérale de l'élément de paroi latérale (7, 9, 12, 14) et que, de préférence, un élément de verrouillage (22) passif pour le verrouillage de l'élément de paroi latérale (7, 9, 12,14) au montant longitudinal (20) est associé à l'extrémité de l'élément de paroi latérale (7, 9, 12, 14) dirigée vers l'unité de montage (27).

15. Structure de caisse fourgon à parois pliables selon la revendication 14,
**caractérisée en ce qu'**un dispositif de verrouillage (17) susceptible de pouvoir être actionné activement pour le verrouillage de l'élément de paroi latérale (6, 8, 10, 11, 13,15) au montant longitudinal (20) est associé à l'extrémité latérale de l'élément de paroi latérale (7, 9, 12, 14) opposée à l'unité de montage (27).
